# EUROPEAN PATENT SPECIFICATION

(11) **EP 0 692 188 B1**
(45) Date of publication and mention of the grant of the patent: **28.10.1998**
(21) Application number: 95110769.7
(22) Date of filing: 10.07.1995
(51) Int. Cl.: A01K 23/00

(54) **Dog diaper**
Hundewindel
Couche pour chien

(30) Priority: 11.07.1994 GB 9413956; 06.02.1995 GB 9502261
(43) Date of publication of application: 17.01.1996
(73) Proprietor: Kelly, Wanda Mary, Moncton, NB, E1C 8J8 (CA)
(72) Inventor: Kelly, Wanda Mary, Moncton, NB, E1C 8J8 (CA)
(74) Representative: Asquith, Anthony

(56) References cited:
- US-A- 4 893 587
- US-A- 5 146 874
- US-A- 5 234 421

## Description

This invention relates to diapers for animals such as dogs.

### BACKGROUND TO THE INVENTION

It is becoming increasingly unacceptable, and in some jurisdictions illegal, for pet-owners to allow their dogs to foul footpaths, sidewalks, and public places. Several systems have been proposed for assisting the owner in the task of picking up the dog's solid excrement, and of carrying the excrement away for subsequent disposal.

These systems have involved apparatus such as scoops, bags, etc, which are carried by the owner. The owner uses the apparatus to scoop up and collect the excrement after the dog has deposited the excrement on the ground.

It may be surmised that one of the reasons these systems have not had universal acceptability is that the owner is required to take direct action to pick up the excrement from the ground. The act of scraping or scooping the excrement into a container, it seems, is too distasteful.

### GENERAL FEATURES OF THE INVENTION

The invention lies in a disposable dog diaper. The diaper is secured around the dog's body using Velcro, straps, etc as will be described.

The diaper is so manufactured as to create a pocket, when the diaper is secured around the dog. The pocket is open-mouthed, the mouth being so positioned as to receive pieces of solid excrement excreted from the anal region of the dog.

The pocket is loose and baggy, but preferably the lip of the pocket is stiffer, by virtue of which the lip is pressed against the skin of the dog, below the anal region. The mouth of the pocket remains open, while the lip is pressed against the dog, with the result that the excrements drop into the pocket, substantially without smearing.

When the diaper is removed from the dog, the nature of the diaper is such that the person removing the diaper can gather up the ends of the material of the diaper with the excrements still contained in the pocket, and the person does not have to run the risk of touching the excrement, nor even of feeling the excrement through the material of the diaper.

As will be seen, the pocket may be formed simply by doubling over the material of the diaper into a Z-fold, and by stitching the marginal edges. The lines of stitching define the extent of the pocket.

A diaper with a pocket formed in this manner can be manufactured very cheaply, and economy of manufacture is important, of course, in a disposable diaper. The disposable item comprises an inexpensive piece of waterproof plastic, and some simple, and easily automated, stitching. Some inexpensive absorbent padding may be added in some embodiments.

THE INVENTION IN RELATION TO THE PRIOR ART

The prior art in the field of dog-diapers includes the following patent publications.
US-3,817,217 (1974, Matuka)
US-4,095,562 (1978, Graham)
US-4,813,949 (1989, O'Rourke)
US-4,969,419 (1990, Fong)
US-5,146,874 (1992, Vidal)
US-5,226,386 (1993, Thoma)
US-5,315,960 (1994, Lamp)

It is clear from this prior art that disposable diapers for dogs have not previously been proposed. Diapers with disposable receptacles are known, but, as will be described, that is really not good enough for dog diapers. Disposable diapers for human babies are of course well-known, and the dog-diaper as described herein follows some of the constructional techniques of the human diaper, including the use of thin waterproof plastic sheeting, and the use of thick padding to absorb liquid excrement, in some embodiments. However, the dog-diaper inevitably differs as to its shape, and manner of operation, as compared with a human diaper.

### DETAILED DESCRIPTION OF PREFERRED EMBODIMENTS

By way of further explanation of the invention, exemplary embodiments of the invention will now be described with reference to the accompanying drawings, in which:
Fig 1 is a view of a dog-diaper that embodies the invention, shown in the as-manufactured condition;
Fig 1A is the same view as Fig 1 of a modification to the diaper;
Fig 2 is a cross-section of the diaper, the diaper being assembled onto a dog;
Fig 3 is a pictorial view of the diaper of Fig 1, shown assembled onto a dog;
Fig 4 is another view of the diaper of Fig 1;
Fig 5 is a pictorial view of a diaper and associated components;
Fig 6 is a cross-section corresponding to Fig 2 of another diaper;
Fig 7 is a cross-section corresponding to Fig 6 of another diaper;
Fig 8 is a front elevation of the diaper of Fig 7;
Fig 9 is a plan of another diaper, in which elastic stitching is shown in a stretched-flat condition;
Fig 10 is a cross-section of a component of the diaper of Fig 9;
Fig 11 is a plan of another diaper, corresponding to Fig 9;
Fig 12 is a pictorial view of another diaper.

The apparatuses shown in the accompanying drawings and described below are examples which embody the invention. It should be noted that the scope of the invention is defined by the accompanying claims, and not necessarily by specific features of exemplary embodiments.

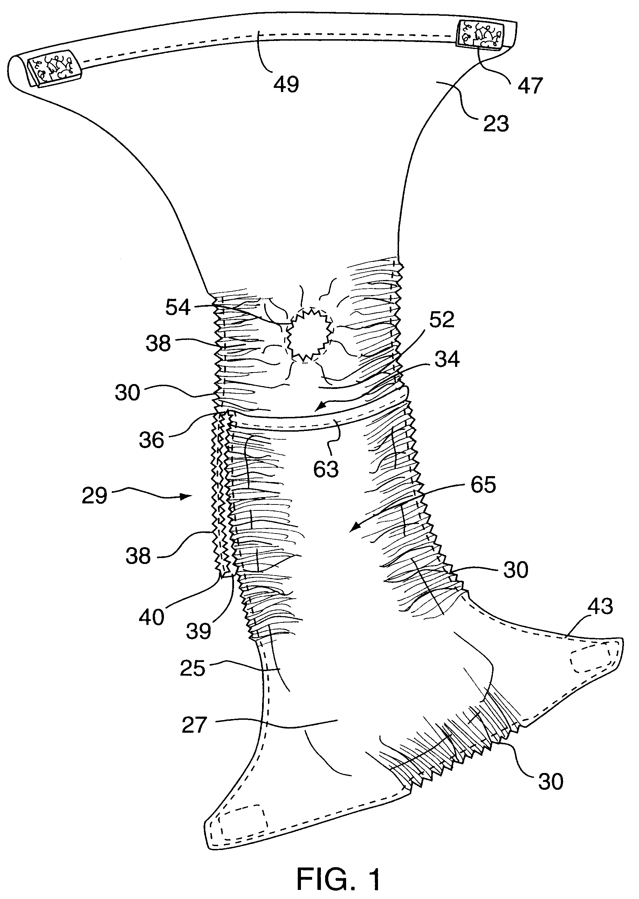

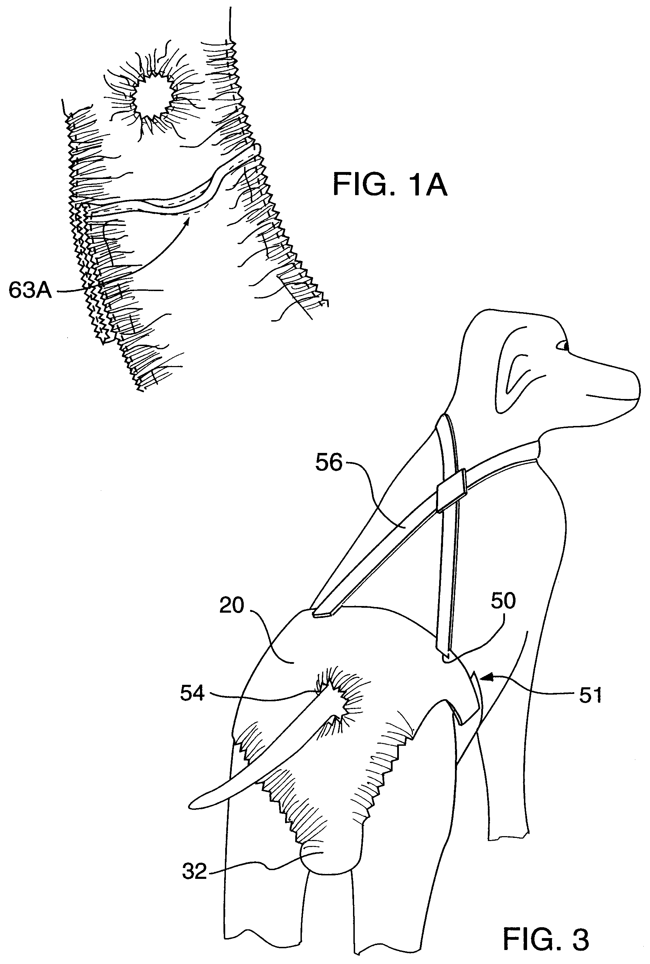

As shown in Fig 1, the diaper 20 includes a sheet 23 of thin, plastic, waterproof, material. In this instance, the sheet is 0.11 mm thick, and made of polyethylene. Polyethylene can be obtained down to about 0.08 mm thick, but that is a little too flimsy for a practical diaper. Thicker sheet would be uneconomical.

The diaper includes also a thick pad 25 of conventional super-absorbent sponge or padding material, and a cover 27 of thin fabric, which is porous and permeable (i.e through which liquid may pass freely).

The waterproof sheet 23 is folded, during manufacture of the diaper, into a Z-fold, as shown at 29 in Fig 1. The sheet is stitched along its margins, as at 30, to lock in the Z-fold, thereby forming a pocket 32.

The pocket 32 comprises has an open mouth 34, defined as the space between the upper fold 36 of the Z-fold 29 and the underlying area 38 of the plastic sheet 23.

Between the marginal lines 30 of stitching, the pocket 32 is free. The depth of the pocket is defined as the distance of the intermediate area 39 of the sheet 23 lying between the upper fold 36 and the lower fold 40 of the Z-fold 29.

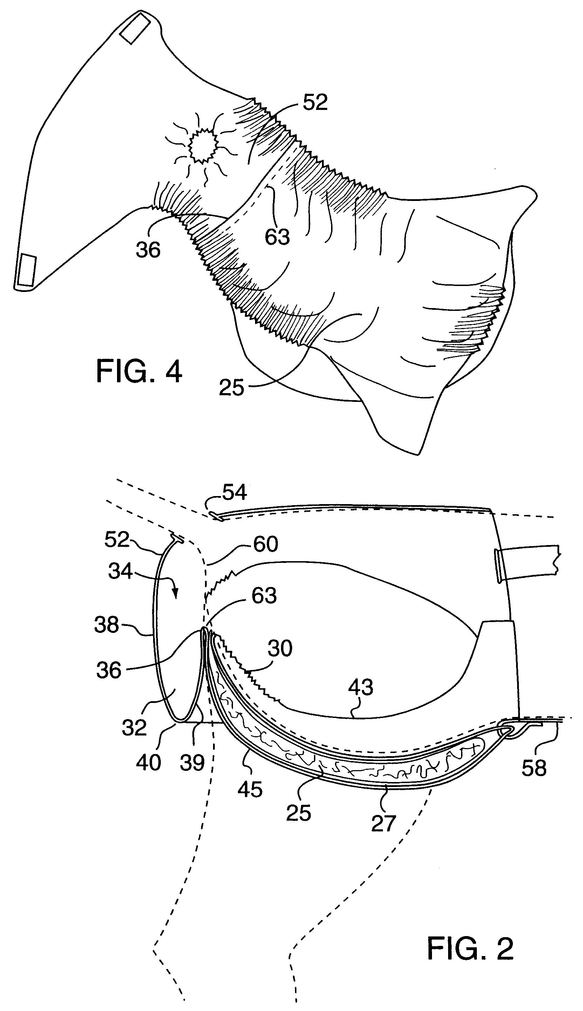

The Z-fold, and the manner in which the Z-fold gives rise to the open-mouthed configuration of the pocket, is shown in Fig 2.

The lines of stitching as shown at 30 are done with elastic thread, whereby, after the stitching is finished, and the material released, the elastic contracts, and the material under the stitches forms itself into pleats or gathers. The elastic stitching is shown by numeral 30; stitching with ordinary non-elastic thread is shown by numeral 43.

The permeable fabric cover 27 overlies the whole area 45 of the plastic sheet 23 which lies forward of the upper fold 36. The cover 27 is stitched to the area 45 all round its circumference. Some portions of the total length of the stitching are elastic, some are non-elastic.

The pad 25 of absorbent material is sandwiched between the area 45 of the plastic sheet 23 and the permeable cover 27. The pad may be stitched in place to stop it bunching or moving; or the pad may simply be placed between the sheet and the cover before the two are stitched together.

Fig 4 shows the effect of the elastic thread. The diaper naturally assumes a hollowed-out configuration in the area of the absorbent pad, and the plastic sheet naturally becomes highly folded and loose around the mouth 34 of the pocket 32.

Patches 47 are shown stitched into the corners of the diaper. The patches 47 are of a pressure-sensitive or peel-and-stick adhesive, or, for example, of Velcro. The patches are used for securing the diaper around the dog. Extra strength may be built in around the patches by doubling over the waterproof sheet to form a hem 49. Tie-tapes may be provided, for use instead of Velcro patches. The requirements of economical mass-production should be considered in selecting the most appropriate type of fastener.

The waterproof material is not knitted or woven, and therefore the hem 49 is not needed as a means for preventing the edge from fraying. However, the waterproof material is very thin, and consequently is not very strong. The waterproof material in fact, for acceptable economy, must be just barely thick enough that the material can be classed as waterproof; such thin material is easily damaged, and might be rather vulnerable around the fixing patches if not reinforced by doubling over, as provided by the hem 49.

The diaper 20 is held in place with straps 50, and the straps pass through slots in the waterproof material: again, these slots preferably should be in the hemmed area 49 of the sheet 23 where the material is doubled over. Alternatively, the straps may be attached after the diaper has been Velcro'd or tied in place, and the straps may in that case be looped around the bridge area 51, at which the extremities of the sheet are brought together.

Just above the mouth 34 of the pocket 32, the area 52 of the sheet 23 is formed with a tail-hole 54. The tail-hole 54 is stitched around with elastic thread; when the elastic contracts, the waterproof material around the tail hole becomes puckered and folded.

In use of the diaper, as shown in Fig 3 the tail of the dog is passed through the tail-hole 54, and the diaper is secured around the dog's waist using the securement patches 47. Straps 56 are attached from the slots 50, and the straps run forwards and are secured around the dog's neck. The straps 56 may be tailored or adjusted for the particular dog, or the straps may be of elastic, whereby one size of strap fits many sizes of dog.

It may be noted that although the diaper is intended to be disposable, it is intended that the straps may be retained, and re-used. In fact, the straps, or at least a forward portion of the straps, may be permanently built into the dog's leash-harness. Disposable straps are contemplated, but economy will generally dictate that non-disposable straps be used, i.e that the straps be retained for re-use.

Straps 56 that run along the dogs back are easy to put on, and may be all that is needed in many cases. However, a strap 58 that runs underneath the dog's chest, although more difficult to put on, is favoured also, or instead, because, if such a strap is present, the control of the fit of diaper to the dog is much enhanced. The front end of the strap 58 is stitched to the neck loop of the strap 56.

The pocket 32 of the diaper serves the purpose of receiving solid excrements from the dog. As such, the designer should aim for the following.
1. It is important that the area 52 of the plastic sheet material just above the pocket should stand a small distance away from the dog's skin (i.e hair), at least in the area 60 immediately underneath the tail opening 54; if this area of the plastic material were pressed against the skin, smearing of the excrement over that area would be likely.
2. It is important that the mouth 34 of the pocket should be wide open in the front-rear sense, at least during the time when the dog is excreting.
3. It is important that the upper fold 36 which constitutes a lip 63 of the mouth 34 of the pocket, should rest against the dog's skin or hair; if there were a gap between the lip 63 and the dog's skin at this location, there is a chance that the excrement might fall through this gap, and not into the pocket.

The designer should see to it that the excrement will drop into the pocket 32, and remain secure in the pocket until the pet-owner can remove the diaper and dispose of same. Thus, the excrement should drop straight into the pocket, touching neither the area 52 of the sheet 23, nor the lip 63 of the pocket. There should be no smearing of any of the plastic sheet material outside the pocket.

The lip 63 of the pocket tends to be drawn forwards with respect to the dog when the diaper is assembled onto the dog. The geometry of the diaper, and the tension from the straps, help to pull the lip forwards. The chest strap 58, if one is provided, is helpful also in drawing the lip 63 forwards. This pulling of the lip forwards has two effects: the pulling tends to draw the mouth 34 of the pocket open, and at the same time tends also to press the lip against the skin of the dog.

The pulling forward of the lip of the pocket is more efficacious if the lip is stiff. The lip may be stiffened by ensuring that the absorbent material is present in the lip area, and is stitched in in such a manner as to be effective to add bulk to the lip area.

Also, the lip may be doubled over or folded over, as a measure for stiffening the lip, as shown in Fig 1A. The lip 63A may be secured in the doubled-over configuration in the centre by appropriate stitching. This shaping of the lip, especially when the lip is stiffened by the presence of the padding within the lip, again is effective in holding the pocket open, and in forcing the lip against the body of the dog.

While the designer should aim to make the lip stiff, the designer should, in contrast, aim to make the area 52, and the pocket itself, very loose and baggy. The more loose and baggy this area is, the more the pocket 32 tends to stand off from the dog.

The pad area 65 of the diaper below (i.e forward of) the pocket 32 has the characteristic that the edges of the area 65 are crinkled due to the elastic thread used for the stitching 30. The crinkled edges make the pad area adopt a bowl-shape, and the bowl-shape tends to make the lip curl forwards. The crinkled edges therefore serve as another mechanism for bringing the lip 63 of the pocket into touching contact with the dog's skin.

As may be seen from the drawings, the diaper 20, though sophisticated in concept, is of an easy-to-manufacture character, requiring only simple stitching operations. The diaper is made from the same materials, and by the same processes, from which conventional human disposable diapers are made, which, as is well known, are cheap enough to be disposable. The diaper as described is very easy to use (for the pet-owner, as well as for the pet) in that the excrements are collected in the baggy pocket, and remain therein while the dog continues with its walk. The pet-owner does not have to collect the excrements into a container, and then carry the container in his hand: the dog in fact carries the excrements.

At the end of the dog's outing, the excrements are still in the pocket, and remain there during disassembly of the diaper from the dog. The person finds it an easy matter then to discard the disposable diaper, without any chance of touching the excrement directly, and without feeling the excrement through the thin plastic material, which many owners would find distasteful. Of course, once the pocket contains excrements, and before the diaper is removed, the dog should be dissuaded from sitting down upon the pocket, and from indulging in other activities which might cause smearing.

One of the critical aspects of performance of a pet-excrement collector lies in the manner in which the person removes the excrement-containing item, and transports the excrement-containing item to the garbage bin or other disposal facility. In this regard, it may be regarded that it is a disadvantage if the item to be taken off the dog, and to be carried in the person's hands, is small. The person is much more comfortable in manipulating the excrement-containing item, and transporting the item, if the item is large; or rather, not simply large, but has extremities by means of which the person can grasp the excrement-containing item.

In the present case, the person is not required to carry out a task of disassembly or removal of detachable excrement-containing pockets from some kind of a permanent garment; an operation which, if it were required, might well lead (occasionally) to the excrement being contacted. In the present case, the whole garment is removed in one piece. Furthermore, the garment is grasped by its extreme corners during disassembly from the dog, in order to peel off the Velcro fasteners. The person's hands are far removed from the excrement-containing areas while manipulating the Velcro fasteners.

In the case of the design of diaper as described, the person may detach the diaper, and may convey the diaper to a garbage bin, and at all times the person's fingers remain several centimetres from the actual excrement. It is most unlikely that the extremities, where the Velcro patches are located, could become soiled and smeared, even if the dog should be boisterous. After the diaper is removed, the person may hold the diaper by its four extremities.

Also, in the present case, it may be noted that the excrement can be expected to remain invisible during the whole disposal operation.

It is recognised that the dimensions of the diaper are important for the best performance of the diaper. The diaper may be sold in three or four sizes; small, medium, large, extra large. For the medium size, typical dimensions are:
overall length: 60 cm (the contraction of the elastic thread means that the working length of the diaper is much less than this);
length of padded area: 28 cm;
width, padded end: 30 cm; width, tail end: 33 cm;
width at pocket: 20 cm;
distance from tail-hole to lip of pocket: 5 cm.

Although stitching has been described as the manner of attaching the various components and areas of the diaper together, other fastening means are contemplated. For example, conventional heat-welding to make seams in polyethylene is quite simple, and can be adapted for automated mass-production. It is even possible to maintain the gathering/ bunching feature with heat-welding. However, the gathering is not essential, although gathering does serve to pre-bias the diaper to the shape of the dog, ready for when the diaper is assembled to the dog.

It may be that some pet-owners might feel some embarrassment in allowing their dog to appear in public in what is so obviously a diaper. To alleviate this, the diaper may be covered with a garment such as pants or shorts. Clothing for dogs has been proposed previously, but pants-type garments have really never been accepted -- because, it may be suggested, the designer has to provide cut-outs so the garment will not be contaminated by the dog's excrement, with the result that the final garment turns out to be hardly more than a back-jacket.

However, in the present case, the diaper serves to keep dog's clothing items from becoming contaminated with excrement, and therefore there is much more freedom to select items of clothing for the dog. Now, pants-type garments become much more viable. The dog's macho image can be maintained, even though the dog is wearing a diaper, if the diaper is covered with suitable pants or shorts. Of course, dressing the dog in shorts is not every owner's desire, but the point is that the use of the diaper as described permits the wearing of shorts, should the owner so wish.

Pants or shorts, if provided, may be suspended using the same straps as the diaper. In the case where the straps holding the diaper are secured around the bridge area 51, suitable slots or holes may be provided in the pants garments, at the waist, and the forward-extending straps passed therethrough. The chest strap 58, if provided, may be used also to support the pants.

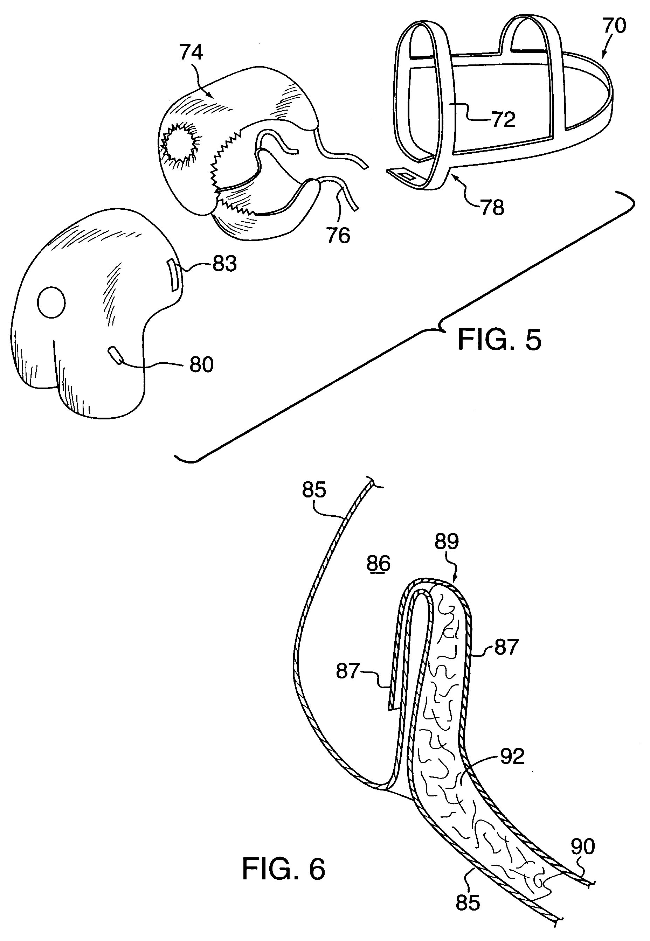

Fig 5 shows a harness 70, which is slipped over the head of the dog, and secured by means of the strap 72 around the dog's waist. The diaper 74 is secured by means of tie-tapes 76, which are tied around the bridge area 78 of the harness. A pants-type garment 80 may be secured by its own separate tie-tapes, or by passing the tie-tapes 76 through a slot 83.

Instead of the tie-tapes 76, the sides of the diaper may be pre-stitched together, whereby the diaper itself forms what may be regarded as a pair of pants. In this case, to maintain snugness of fit with different dogs, panels of stretchy elastic material are stitched into the sides of the diaper.

Fig 6 shows another way of arranging the various components of a dog-diaper. The thin waterproof plastic sheet 85 is doubled over into a Z-fold to form the pocket 86. The liquid-passing material 87 covers the lip area 89 of the pocket, and extends over the lower area 90 of the sheet 85, comprising the front cover of the pocket, and below the pocket. The highly-absorbent material 92 is located between the sheet 85 and the material 87.

Fig 6 shows the configuration of the components at a point midway between the stitched edges, there being no stitching at this midpoint, and shows the components simply folded together. The lip 89 of the pocket is stiffened by the presence of the thick bulk of the material 92.

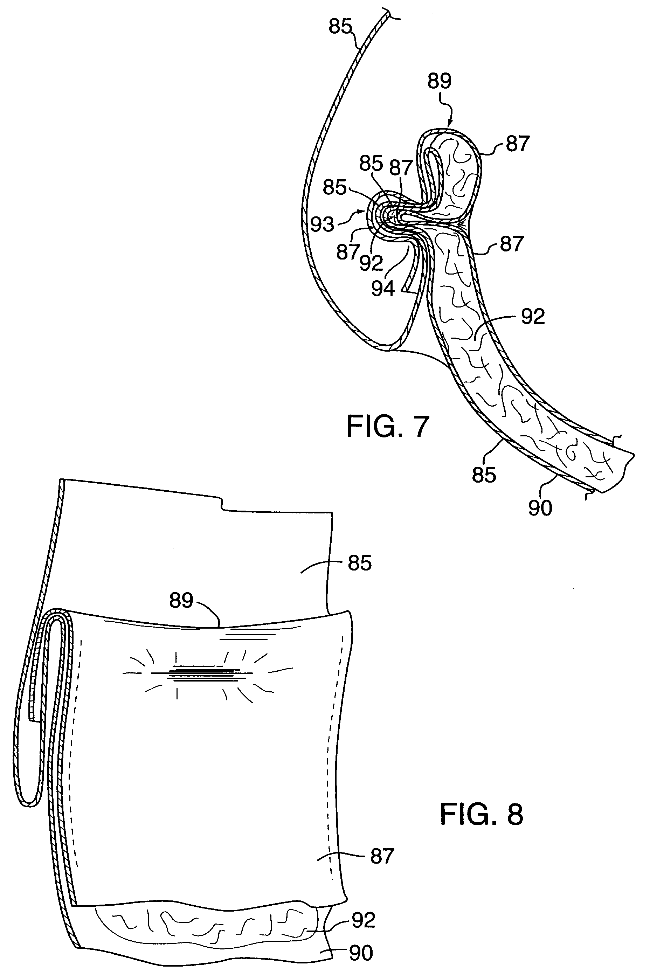

Figs 7 and 8 show a development of Fig 6. In Figs 7 and 8, the components from which the diaper is made are the same as in Fig 6. An area of the front cover 90 of the pocket 86, just below the lip 89 of the pocket, is pinched. All the components are pinched together, being the two thicknesses of the waterproof sheet 85, the two thicknesses of the permeable material 87, and the bulk of the absorbent material 92. The pinched loop 93 is stitched at 94.

The pinch extends only over the middle area of the front of the pocket, just below the lip: the pinch does not extend to the marginally-stitched side edges of the pocket. This middle-only extent of the pinch is shown in Fig 8.

One effect of gathering the middle-only pinch, and stitching same, is to shorten the length of the front cover 90 of the pocket over the middle area of the front cover, while the length of the front cover over the side edges is not shortened. In turn, the effect of shortening only the middle of the front cover is to draw the middle of the lip 89 forwards and outwards, i.e to the right in Fig 7. This action serves to ensure that the mouth of the pocket is kept well open.

Another effect of the pinch is that the lip is considerably stiffened thereby. The extra stiffness arises because the bulk of the absorbent material is compressed by the pinch, and thereby becomes stiffer, and because the pinched loop 93 provides material lying at an angle to the lip itself 89.

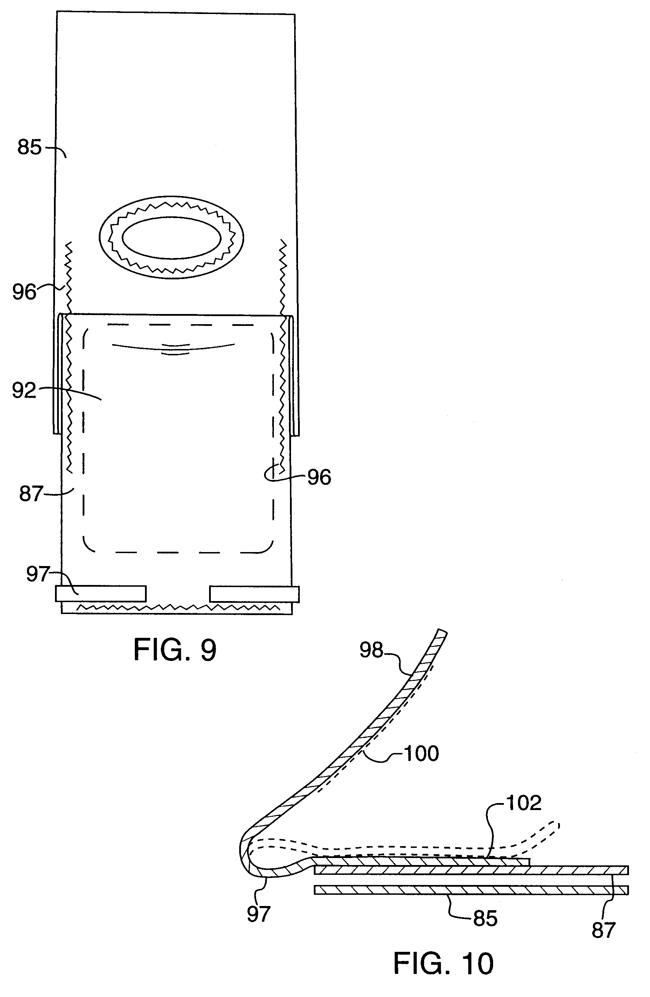

As shown in Fig 9, the diaper is rectangular in shape. In fact, very little stitching is required: elastic stitching is provided where indicated by the wavy lines 96 in Fig 9, i.e down the side edges and laterally across the bottom edge. Apart from the pinch, no straight stitching is needed.

The hole for the dog's tail may be surrounded by glued or stitched elastic tape, for added strength.

Sticky tabs 97 are provided for the purpose of securing the diaper around the dog's waist. Fig 10 shows a sticky tab 97 in detail. The flap 98 of the tab has adhesive on the inside surface 100, which is normally protected by the fact that the flap is stuck to the portion 102 of the tab. The surface of the portion 102 is such that the flap can be easily peeled off the portion. The adhesive is of the kind that sticks to the plastic sheet material 85 so tightly that, upon contact, the bond is stronger than the plastic. (When removing the diaper from the dog, it is a simple matter to tear the plastic material.)

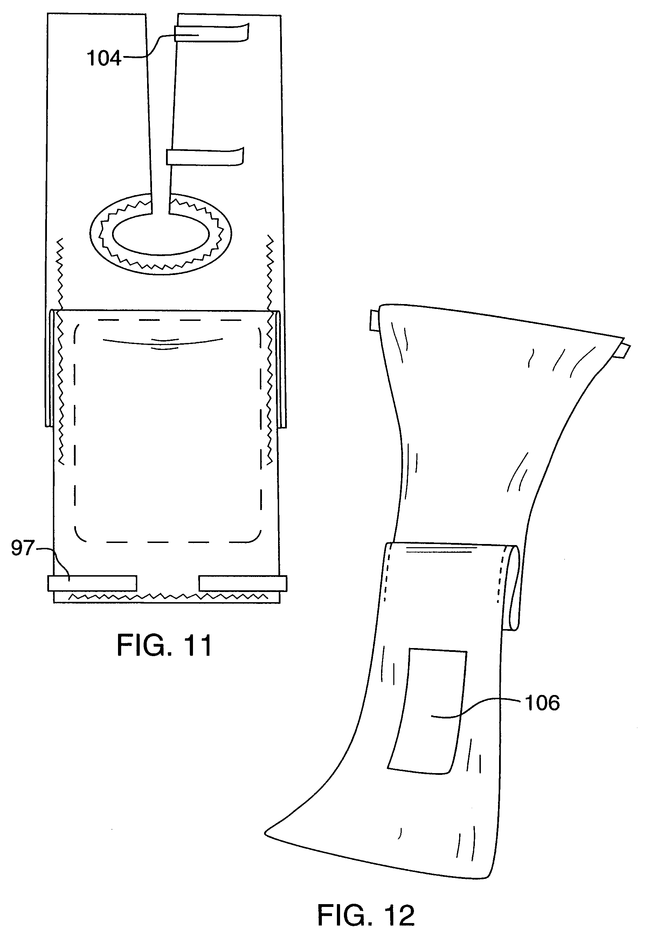

Sometimes, it is not appropriate to pass the dog's tail through the hole in the diaper. In that case, the upper area of the watertight plastic may be slit into two halves, as shown in Fig 11. Sticky tabs 104 are provided for joining the halves after the diaper is assembled to the dog.

Most dogs do tend to shed the diaper if the diaper is not secured with suspender straps, as mentioned. It will not usually be economical for the straps to be disposed of, along with the soiled diaper. The straps should be of elastic material, although non-elastic straps may be used if adjustability of fit is provided for. The straps may be adapted to be attached to the dog's collar or walking harness, or the straps may include a loop for fitting over the dog's head, independent of the collar.

The straps may be secured to the disposable diaper using Velcro, sticky tabs, buttons, tapes, etc, as mentioned.

Although the diapers as described so far have included the absorbent material, for absorbing liquid excrement, it is contemplated that the diaper may comprise only the solid-excrement-receiving pocket. Fig 12 shows such a diaper. No absorbent material, and no liquid-permeable material, are used. The diaper includes a cut-out 106 in the plastic sheet material, whereby liquid excrement from the dog does not touch the diaper.

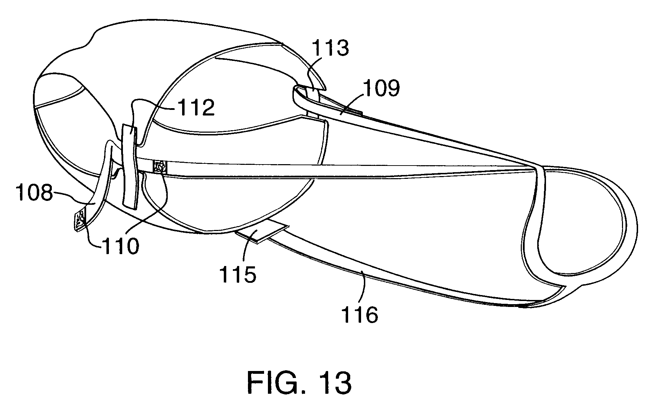

Fig 13 shows a preferred arrangement of straps. The two side-straps have respective loop-portions 108,109 on the end. Each loop-portion includes a tag which may be Velcro'd (at 110) to the strap to secure the loop.

For assembly, the person first attaches the diaper around the dog, assembling the two (sticky) side-tabs 112,113. The loop-portion of the strap is passed around the side-tab.

The diaper may be provided with a sticky tab 115, by means of which a single under-strap 116 is attached to the diaper, prior to assembling the diaper onto the dog.

This three-point strap system is very secure, and is easily assembled, even to an excited dog, and yet the disposable diaper can be formed very inexpensively. The straps require Velcro (or buttons, tie-tapes, etc), to secure the loop, but the straps can be used many times. It is the diaper that can be used only once.

In this specification, expressions of orientation, including front-rear, left-right, etc, are expressed in relation to the dog, when the diaper is in place upon the dog.

USA patents US-5,234,421 and US-5,146,874 might be considered relevant to the invention, in that those patents show disposable diapers for dogs, wherein the diaper is of such a structure as to be suitable for placement upon the dog; the diaper includes a means for constraining the diaper as to its position with respect to the tail of the dog; the diaper includes a sheet of thin waterproof plastic material; and the sheet includes an area which is suitable for placement between the back legs of the dog.

## Claims

1. Disposable diaper for a dog or other animal, wherein:
the diaper is of such a structure as to be suitable for placement upon the dog;
the diaper includes a means (54) for constraining the diaper as to its position with respect to the tail of the dog;
the diaper includes a sheet (23) of waterproof plastic material;
the diaper is formed with a pocket (32), comprising a front cover (39) and an underlying rear cover (38);
the pocket, and the mouth thereof, are so positioned in the diaper as, in use of the diaper on a dog, to receive solid excrements excreted by the dog;
characterised in that:
the rear cover of the pocket is formed in and of the plastic material;
the front cover has an upper extremity (63), which extends in the lateral or right-left direction;
the diaper includes left and right lines of stitching (30) extending in the front-rear direction, and lying across the upper extremity;
at the lines of stitching, the front cover of the pocket, including the upper extremity, is stitched to the underlying rear cover;
the left and right lines of stitching are spaced apart laterally, whereby an unattached portion (63) of the upper extremity is defined between the lines of stitching, the portion being an area in which the upper extremity is not attached to, but is separable from, the underlying area of the rear cover;
a mouth (34) of the pocket is defined as the area between the unattached portion of the upper extremity of the front cover of the pocket and the underlying area of the sheet, whereby the upper extremity comprises a lip of the said mouth.

2. Diaper of claim 1, wherein:
the sheet is formed with a Z-fold (29), comprising an upper fold (36) and a lower fold (40) and an intermediate area (39) of the sheet between the two folds;
the upper fold divides the intermediate area from an overlying area of the sheet, and the lower fold divides the intermediate area from an underlying area of the sheet;
the arrangement of the Z-fold is such that the intermediate area of the sheet and the underlying area form between them the pocket;
the intermediate area of the Z-fold comprises the front cover of the pocket;
the upper fold comprises the upper extremity of the front cover;
and the underlying area of the Z-fold comprises the underlying rear cover of the pocket.

3. Diaper of claim 1, wherein the diaper includes a cover of liquid-permeable fabric material (27), and includes a thick pad (25) of liquid-absorbent material, and wherein the pad lies sandwiched between the said overlying area of the sheet and the cover.

4. Diaper of claim 3, wherein the thick pad of liquid-absorbent material extends into the upper fold (89), and serves to stiffen the upper fold.

5. Diaper of claim 1, in which the diaper includes a means (93) for making the upper fold or lip stiff, while the diaper is so configured that the pocket is loose and baggy.

6. Diaper of claim 1, wherein the sheet (23) in which the Z-fold is formed is a continuous, unitary, single piece of material.

7. Diaper of claim 1, in combination with diaper-holding-straps (56), wherein the straps are so structured as to be effective, upon securement around the dog, to draw the upper fold or lip of the mouth of the pocket forward, away from the underlying area of the sheet, and into contact with the dog's skin, forward of the anal region.

8. Diaper of claim 1, wherein:
the diaper is so configured as to include an over-portion of the diaper which is extendable over the dog's back, and an under-portion of the diaper which is extendable underneath the dog;
the diaper includes operable left and right side fasteners (112,113), which are effective, when operated, to fasten left and right extremities of the portions together.

9. Diaper of claim 8, wherein:
the operable side-fasteners (112,113) include means for releasing the fasteners and for thereby releasing the diaper from the dog after use;
the said means for releasing the diaper is so configured as to be operable by a person's hands and fingers, the means being so structured that the hands and fingers remain several centimetres from the pocket during the release;
and the said means are so configured that the diaper can be picked up and carried away for disposal while the hands and fingers remain so spaced from the pocket.

10. Diaper of claim 8, in combination with diaper-holding-straps, wherein:
the side-fasteners are so configured that, when in use to fasten the said extremities together, a space remains between the over- and under-portions;
the straps include left and right loop-portions (108,109), and include operable loop-fasteners (110), which are effective, when operated, to lock the loop-portions into enclosed loops;
and the straps are so configured that the loop-portions can be assembled, through the spaces, into enclosed loops around the side-fasteners, thereby attaching the straps to the diaper.

## Patentansprüche

1. Wegwerf-Windel für Hunde oder andere Tiere wobei:
die Windel in ihrer Herstellungsform sich zur Ankleidung an das Tier eignet;
die Windel die Eigenschaft (54) einschließt, fest und sicher um den Hundeschwanz anzuliegen;
die Windel eine Einlageschicht (23) von flüssigkeitsundurchlässigen Material aus Kunststoff enthält;
die Windel mit einer die vordere Abdeckung (39) sowie darunterliegende hintere Abdeckung (38) darstellenden Tasche (32) versehen ist;
die Tasche und deren Öffnung folgendermaßen an der Windel angelegt sind, um bei Gebrauch die festen Exkremente des Hundes aufzufangen;
dargestellt indem:
die hintere Abdeckung der Tasche aus dem vorerwähnten Kunststoff- Material besteht;
die Frontabdeckung eine obere Ausdehnung (63) hat, welche sich in seitlicher bzw. links-rechts Richtung erstreckt;
die Windel eine linke und rechte Stichnaht (30) einschließt und sich dabei längenmäßig über das obere Ende ausdehnt;
bei den Stichnähten die vordere Taschenabdeckung einschließlich der oberen Ausdehnung an die unterliegende hintere Abdeckung angenäht ist;
die linken und rechten Stichnähte seitlich spationiert sind, wobei ein loser Teil (63) der oberen Ausdehnung zwischen den Stichnähten ausgebildet ist. Dieser Teil ist jener Bereich, wo die obere Ausdehnung nicht befestigt ist, sondern von dem unterliegenden Bereich der hinteren Abdeckung abgetrennt werden kann;
eine Öffnung (34) der Tasche ausgebildet ist als ein Bereich zwischen dem freien Teil der oberen Ausdehnung gehörend zur vorderen Abdeckung der Tasche, und dem darunterliegenden Bereich der Einlageschicht, wobei die obere Ausdehnung aus einer Lasche der erwähnten Öffnung besteht;

2. Windel nach Anspruch 1, wobei:
die Schicht Z-förmig (29) gefaltet ist und aus einem oberen (36) und unteren (40) Falz, sowie zwischengelegten Bereich (39) innerhalb der zwei Fälze besteht;
der obere Falz den Zwischenbereich von einem überliegenden Bereich der Einlageschicht trennt, während der untere Falz den Zwischenbereich vom unterliegenden Teil trennt;
die Ausführung als Z-Falz es gestattet, daß der Zwischenbereich der Schicht zusammen mit dem unterliegenden Teil eine Tasche formt;
der Zwischenbereich des Z-Falzes die frontale Abdeckung der Tasche umfaßt;
der obere Falz die obere Ausdehnung der frontalen Abdeckung umfaßt;
und der unterliegende Bereich des Z-Falzes die unterliegende,
hintere Abdeckung der Tasche umfaßt.

3. Windel nach Anspruch 1, indem die Windel eine Abdeckung von durchlässigen Material (27) und ein dickes Polster (25) von die Flüssigkeit aufsaugenden Material einschließt, wobei das Polster zwischen den überliegenden Bereich der Schicht und Abdeckung gelagert ist.

4. Windel gemäß Anspruch 3, wobei das dicke Polster, bestehend aus die Flüssigkeit aufsaugenden Materials sich in den oberen Falz (89) erstreckt und damit diesen oberen Falz versteift.

5. Windel nach Anspruch 1, wobei die Windel ein Mittel (93) zur Aussteifung des oberen Falzes bzw. Lasche enthält, während die Tasche sackförmig und nachgiebig bleibt.

6. Windel nach Anspruch 1, wobei die Einlage (23) in welcher der Z-Falz sich formiert ein fortwährend durchgehendes und einzelnes Stück von Material darstellt.

7. Windel nach Anspruch 1, in Kombination mit die Windel stützenden Haltebändern (56), wobei die Bänder bewirken
- nachdem sie um den Hund geschnallt sind - daß der obere Falz oder Lasche der Taschenöffnung nach vorn gezogen wird, abwegig vom unterliegenden Bereich der Einlageschicht und vor dem Afterbereich des Hundes in guten Kontakt mit dessen Haut liegt.

8. Windel nach Anspruch 1, wobei:
die Windel auf eine Art ausgelegt ist um auch den Oberteil der Windel, welcher über den Hunderücken geschlungen werden kann, und den Unterteil der Windel, welche unter den Hundebauch geschlungen wird, einzuschließen;
zur Windel gehören seitlich linke und rechte Verschnallungen (112, 113) welche effektiv die linken und rechten Enden der Teile zusammenhalten.

9. Windel nach Anspruch 8, wobei:
die arbeitsmäßigen seitlichen Schnallungen (112, 113) eine Vorrichtung zum Lockern dieser Schnallungen einschließen, um die Windel vom Hund nach Gebrauch zu entfernen;
dieses Mittel zur Entfernung der Windel kann von der Hand und Fingern einer Person getätigt werden, indem Hand und Finger mehrere Zentimeter von der Tasche während Abnahme entfernt bleiben;
weiterhin sind diese Mittel entsprechend geformt um die Windel aufzuheben und zur Ablage wegzutragen, wobei wiederum Hand und Finger hygienisch von der Tasche entfernt bleiben.

10. Windel nach Anspruch 8, in Verbindung mit Haltebändern wobei:
die Seitenschnallungen so gestaltet sind, indem freier Raum bleibt, wenn die Enden des unteren und oberen Teils verbunden werden;
die Haltebänder linke und rechte Schlaufenteile (108, 109) und Schlaufenkaken (110) einschließen, welche effektiv die Schlaufen zusammenfassen;
und die Haltebänder so gestaltet sind, daß die Schlaufenteile durch Öffnungen in geschlossenen Schlaufen um die Seitenschnallen verbunden werden können und damit die Haltebänder an die Windel angelegt werden.

## Revendications

1. Lange à jeter pour chien ou autre animal:
le lange est structuré de telle sorte qu'on puisse le placer sur un chien;
le lange comprend un moyen (54) pour sa fixation en position par rapport à la queue du chien;
le lange comprend une feuille d'un matériau plastique imperméable;
le lange est formé avec une poche (32) équipée d'une couverture avant (39) et d'une couverture arrière sous-jacente (38), la couverture arrière de la poche étant formée du dit matériau plastique;
la poche et son ouverture sont positionnées dans le lange, si ce lange s'utilise pour un chien, de façon à recevoir les excréments solides de ce chien.
**caractérisé en ce que:**
la couverture arrière de la poche est formée en et de matériau plastique;
la couverture avant porte une extrémité supérieure (63) qui s'étend dans la direction latérale, ou de droite à gauche;
le lange porte à droite et à gauche des coutures (30) s'étendant dans la direction avant-arrière et qui coupent son extrémité supérieure;
aux coutures, la couverture avant de la poche, y compris son extrémité supérieure, est rattachée à sa couverture arrière sous-jacente;
les coutures de droite et de gauche sont espacées dans la direction latérale, définissant ainsi entre les coutures une
portion (63) d'extrémité non rattachée, cette portion étant une partie dans laquelle l'extrémité supérieure n'est pas rattachée à la partie sous-jacente de la couverture arrière, mais séparable de cette dernière;
la partie située entre la portion non rattachée de la couverture avant de la poche et la partie sous-jacente de la feuille, définissent une ouverture (34) de la poche, la partie d'extrémité supérieure formant un rebord de la dite ouverture.

2. Lange suivant la revendication 1., dans lequel:
on soumet la feuille à un pliage en Z (29) comprenant un pli supérieur (36) et un pli inférieur (40) avec une partie intermédiaire (39) de la feuille entre les deux plis;
le pli supérieur sépare la partie intermédiaire d'une partie sus-jacente de la feuille, et le pli inférieur sépare la partie intermédiaire de la partie sous-jacente de la feuille;
ce pliage en Z est tel que la partie intermédiaire de la feuille et sa partie sous-jacente forment la poche entre elles;
la partie intermédiaire dit pliage en Z comprend la couverture avant de la poche;
le pli supérieur comprend la couche sous-jacente arrière de cette poche.

3. Lange suivant la revendication 1., qui comprend une couverture de tissu (29) perméable aux liquides et qui comprend encore une couche épaisse de rembourrage (25) d'un matériau qui absorbe les liquides, et dans lequel cette couche de rembourrage est insérée entre la dite partie sus-jacente de la feuille et la couverture.

4. Lange selon la revendication 3., dans lequel la couche de rembourrage épaisse d'un matériau absorbant les liquides s'étend jusque dans le pli supérieur (89) et sert au raidissement de ce pli supérieur.

5. Lange selon la revendication 1, ce lange comprenant un moyen (93) de raidir le pli ou lèvre supérieur, le lange ayant une configuration telle que la poche et lâche et bouffante.

6. Lange selon la revendication 1., dans lequel la feuille (23) dont on forme le pliage en Z est une pièce de matériau seule, unique, et continue.

7. Lange selon la revendication 1, combiné avec des attaches (56) qui le retiennent; ces attaches étant structurées de sorte à pouvoir, une fois fixées autour du chien, tirer le pli supérieur ou lèvre de l'ouverture de la poche vers l'avant, loin de la partie sous-jacente de la feuille, et en contact avec la peau du chien à l'avant de la région anale.

8. Lange selon la revendication 1., ayant une configuration telle qu'elle comprend une partie de lange supérieure qui peut s'étendre sur le dos du chien, et une partie de lange inférieure qui peut s'étendre sous le chien;
le lange comprenant des agrafes de côté actionnables (112, 113) capables, lorsqu'on les actionne, d'agrafer ensemble les extrémités de gauche et de droite des différentes parties.

9. Lange selon la revendication 8, dans lequel:
les agrafes des côtés (112, 113) comprennent des moyens pour leur séparation et donc pour enlever le lange du chien après usage;
les dits moyens pour enlever le lange ayant une configuration telle qu'ils sont actionnables par les mains et doigts d'une personne, ces mains et doigts restant à plusieurs centimètres de la poche pendant cette opération;
et les dits moyens ont une configuration telle qu'il est possible de prendre le lange et d'en disposer alors que mains et doigts restent ainsi distants de la poche.

10. Lange selon la revendication 8, en combinaison avec des attaches le retenant, dans lequel les moyens de fixation des côtés ont une configuration telle que, lorsqu'on les utilise pour fixer ensemble les dites extrémités, un espace demeure entre la portion supérieure et la portion inférieure;
les attaches comprennent, à droite et à gauche des portions en fourme de boucle (108, 109) ainsi que des moyens de fixation (110) actionnables en forme de boucle;
et les attaches ont une configuration telle que l'on petit assembler les portions en forme de boucle à travers l'espace libre, sous forme de boucles fermées autour de crochets, fixant ainsi les attaches au lange.
